# EUROPEAN PATENT APPLICATION

(11) **EP 4 618 287 A1**
(43) Date of publication of application: **17.09.2025**
(21) Application number: 23895016.6
(22) Date of filing: 21.11.2023
(51) Int. Cl.: H01M 50/383, H01M 50/24, H01M 50/325, H01M 50/204, H01M 50/30

(54) **BATTERY PACK**

(30) Priority: 21.11.2022 KR 20220156748
(71) Applicant: LG Energy Solution, Ltd., Seoul 07335 (KR)
(72) Inventor: KIM, Jae Wook, Daejeon 34122 (KR)
(74) Representative: Plasseraud IP
(86) International application number: PCT/KR2023/018836
(87) International publication number: WO 2024/112089

(57) **Abstract**

The present invention provides a battery pack including: a plurality of battery modules 100 wherein each of the plurality of battery modules 100 may include one or more battery cells and a module housing 120 where the one or more battery cells are accommodated and which is at least partially opened upwards; a pack housing 200 where the plurality of battery modules 100 are accommodated; and one or more module covers 300 covering upper portions of the plurality of battery modules 100. At least one of: the module housing 120 of each of the plurality of battery modules 100; and the pack housing 200 and the module cover 300 define a predetermined space S blocked on all sides and accommodating the one or more battery cells in each of the plurality of battery modules 100. Different predetermined spaces S accommodating the one or more battery cells of the different battery modules 100 are separated from each other. The height of the upper end of the predetermined space S is higher than that of the upper end of the one or more battery cells accommodated in the predetermined space S.

## Description

### [TECHNICAL FIELD]

This application claims the benefit of priority based on Korean Patent Application No. 10-2022-0156748 filed on November 21, 2022, entire content disclosed in the document of the patent applications is included as a part of this specification.

The present invention relates to a battery pack, and more specifically, to a battery pack wherein delaying of thermal propagation and suppression of thermal runaway are facilitated with a simple configuration at low cost.

### [BACKGROUND ART]

A secondary battery refers to a battery that may be charged and discharged, unlike primary batteries that cannot be recharged. These secondary batteries are used in small, high-tech electronic devices such as mobile phones, PDAs and laptop computers as well as in energy storage systems

(ESS), electric vehicles (EV) or hybrid electric vehicles (HEV) as a power source.

A battery module refers to a device in which multiple secondary batteries (hereinafter referred to as battery cells) are connected in series or parallel. When a problem such as a short circuit occurs in some of the battery cells inside the battery module and the temperature of the battery cell exceeds the critical temperature, a thermal runaway phenomenon may occur.

Heat, flame, etc. generated by the thermal runaway phenomenon of some battery cells inside the battery module elevates the temperature of other battery cells, which may cause the thermal runaway phenomenon to spread to other battery cells. When the thermal runaway phenomenon rapidly spreads to other battery cells, the possibility of the battery module igniting or exploding increases. Accordingly, it is necessary to delay heat transfer between battery cells or between battery modules 100.

In relation to this, Korean Patent No. 10-2332128 provides a battery pack capable of that delaying/preventing the propagation of thermal runaway phenomenon by installing a silicon sponge pad between battery cells.

However, when special pads are installed between battery cells to delay heat transfer between battery cells, the manufacturing cost and the size of the battery module 100/battery pack increase.

### [PRIOR ART LITERATURE]

### [PATENT DOCUMENT]

(Patent Document 0001) Korean Patent No. 10-2332128

### [DISCLOSURE]

### [TECHNICAL PROBLEM TO BE SOLVED]

In order to solve above-described problems, it is an object of the present invention to provide a battery pack capable of delaying thermal propagation (TP) and suppressing the worsening of thermal runaway (TR) at low cost with a simple configuration.

It is an object of the present invention to provide a battery pack that has a simple structure to reduce manufacturing and maintenance costs.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a battery pack including a plurality of battery modules 100, a pack housing 200 and one or more module covers 300.

Each of the plurality of battery modules 100 may include one or more battery cells and a module housing 120.

The one or more battery cells may be accommodated in the module housing 120.

The module housing 120 may be at least partially opened upwards.

The plurality of battery modules 100 may be accommodated in the pack housing 200.

The one or more module covers 300 may cover the upper portions of the plurality of battery modules 100.

In each of the battery modules 100, at least one of: the module housing 120 of the battery module 100; and the pack housing 200, and the module cover 300 may define a predetermined space S.

The predetermined space S may accommodate the one or more battery cells of the battery module 100.

The predetermined space S may be blocked on all sides.

The different predetermined spaces S accommodating the one or more battery cells of the different battery modules 100 may be separated from each other.

The height of the upper end of the predetermined space S may be higher than that of the upper end of the one or more battery cells accommodated in the predetermined space S.

In one embodiment, the distance D between the upper end of the predetermined space S and the upper end of the one or more battery cells accommodated in the predetermined space S may be equal to or greater than 1/15 of a vertical length L of the one or more battery cells accommodated in the predetermined space S and equal to or less than the vertical length L.

In one embodiment, at least one of the plurality of battery modules 100 may include a plurality of blocks 110.

Each of the plurality of blocks 110 may include one or more battery cells.

The predetermined space S of each of the at least one of the plurality of battery modules 100 includes a plurality of block spaces BS corresponding to the plurality of blocks 110, respectively.

Each of the plurality of block spaces BS may accommodate the one or more battery cells included in each of the plurality of blocks 110 corresponding to each of the plurality of block spaces BS.

The plurality of block spaces BS may be separated from each other.

The height of the upper end of each of the plurality of block spaces BS is higher than that of the upper end of the one or more battery cells accommodated in each of the plurality of block spaces BS.

In one embodiment, the module housing 120 of each of the at least one of the plurality of battery modules 100 may include one or more partition walls 122.

The one or more partition walls 122 may be arranged to be spaced apart from each other in the horizontal direction.

The one or more partition walls 122 may partition the plurality of different block spaces BS.

Each of the one or more module covers 300 or at least a portion of the one or more module covers 300 covering the upper portion of each of the at least one of the plurality of battery modules 100 may include an upper frame 310 and one or more ribs 320.

The one or more ribs 320 may protrude downward from a lower surface of the upper frame 310.

The one or more ribs 320 may correspond to the one or more partition walls 122, respectively.

The one or more ribs 320 may extend along the one or more partition walls 122 when projected on a horizontal plane so as to be adjacent to or in contact with the one or more partition walls 122, respectively.

The plurality of block spaces BS may be partitioned by the one or more partition walls 122 and the one or more ribs 320.

Accordingly, the plurality of block spaces BS may be separated from each other.

In one embodiment, a through-hole 214 connecting the inside and the outside of the predetermined space S and capable of being opened and closed may be provided at the module housing 120, the pack housing 200 or the one or more module covers 300 defining the predetermined spaces S.

The through-hole 214 may remain closed when a pressure of the predetermined space S is less than a threshold value and may be opened when the pressure of the predetermined space S is equal to or greater than the threshold value.

In one embodiment, a plurality of through-holes 214 may be provided.

Each of the plurality of through-holes 214 may correspond to the predetermined space S of each of the plurality of battery modules 100.

The pack housing 200 may further include a plurality of blocking plates 230.

The plurality of blocking plates 230 may be installed adjacent to the plurality of through-holes 214, respectively.

The plurality of blocking plates 230 may block the plurality of through-holes 214, respectively.

When the pressure of the predetermined space S corresponding to the through-hole 214 blocked by the blocking plate 230 is equal to or greater than the threshold value, the blocking plate 230 blocking the through-hole 214 is damaged to open the through-hole 214.

Accordingly, when the pressure of a predetermined space S is less than the threshold value, the through-hole 214 remains closed, and when the pressure of the predetermined space S is equal to or greater than the threshold value, the through-hole 214 is opened.

In one embodiment, the pack housing 200 may include an accommodating space C and a first flow space U1.

The plurality of battery modules 100 may be accommodated in the accommodating space C.

The first flow space U1 may be disposed at one side of the accommodating space C in first direction intersecting with vertical direction.

Gas generated from the plurality of battery modules 100 may flow in the first flow space U1.

The plurality of battery modules 100 may be accommodated side by side in the accommodating space C in second direction intersecting with the vertical direction and the first direction.

Accordingly, the one or more module covers 300 and a plurality of the predetermined spaces S may be arranged or provided side by side in the second direction.

The through-hole 214 corresponding to the predetermined space S may be provided at the one side of the predetermined space S in the first direction.

For each predetermined space S, the through-hole 214 corresponding to the predetermined space S may connect the predetermined space S to the first flow space U1.

In one embodiment, at least one of the plurality of battery modules 100 may include a plurality of blocks 110.

Each of the plurality of blocks 110 may include one or more battery cells.

The predetermined space S of each of the at least one of the plurality of battery modules 100 may include a plurality of block spaces BS corresponding to the plurality of blocks 110, respectively.

Each block space BS may accommodate one or more battery cells included in the block 110 corresponding to the block space BS.

The plurality of block spaces BS may be separated from each other.

The height of the upper end of each of the plurality of block spaces BS is higher than that of the upper end of the one or more battery cells accommodated in each of the plurality of block spaces BS.

The module housing 120 of each of the at least one of the plurality of battery modules 100 may include one or more partition walls 122.

The one or more partition walls 122 may be arranged to be spaced apart from each other in the second direction.

The one or more partition walls 122 may partition the plurality of different block spaces BS.

Each of the one or more module covers 300 or at least a portion of the one or more module covers 300 covering the upper portion of each of the at least one of the plurality of battery modules 100 may include an upper frame 310 and one or more ribs 320.

The one or more ribs 320 may protrude downward from the lower surface of the upper frame 310.

The one or more ribs 320 may correspond to the one or more partition walls 122, respectively. The one or more ribs 320 may extend along the one or more partition walls 122 when projected on a horizontal plane so as to be adjacent to or in contact with the one or more partition walls 122, respectively.

The plurality of block spaces BS may be partitioned by the one or more partition walls 122 and the one or more ribs 320.

Accordingly, the plurality of block spaces BS may be separated from each other.

The through-hole 214 corresponding to the predetermined space S of each of the at least one of the plurality of battery modules 100 may connect the plurality of block spaces BS to outside of the battery module 100.

**In** one embodiment, the one or more partition walls 122 and the one or more ribs 320 may extend in the first direction.

The one or more partition walls 122 and the one or more ribs 320 may be arranged side by side in the second direction perpendicular to the first direction.

The through-hole 214 corresponding to the predetermined space S of each of the at least one of the plurality of battery modules 100 may connect the plurality of block spaces BS to the outside of the battery module 100 when a pressure of any one of the plurality of block spaces BS increases.

In one embodiment, at least one of the one or more module covers 300 may include an upper frame 310 and a separation wall 330.

The separation wall 330 may protrude downward from a lower surface of the upper frame 310.

The separation wall 330 is disposed between side walls of the module housing 120 of a pair of battery modules 100 disposed laterally adjacent to each other.

### [ADVANTTAGEOUS EFFECTS]

According to the embodiment of the present invention, a battery pack may include: a plurality of battery modules 100 wherein each of the plurality of battery modules 100 may include one or more battery cells and a module housing 120 where the one or more battery cells are accommodated and which is at least partially opened upwards; a pack housing 200 where the plurality of battery modules 100 are accommodated; and one or more module covers 300 covering upper portions of the plurality of battery modules 100. At least one of: the module housing 120 of each of the plurality of battery modules 100; and the pack housing 200 and the module cover 300 define a predetermined space S blocked on all sides and accommodating the one or more battery cells in each of the plurality of battery modules 100. Different predetermined spaces S accommodating the one or more battery cells of the different battery modules 100 are separated from each other. The height of the upper end of the predetermined space S is higher than that of the upper end of the one or more battery cells accommodated in the predetermined space S.

Accordingly, an empty space where gas and/or thermal energy discharged from the battery cell of the battery module 100 stagnates may be provided in the individual predetermined space S for each battery module 100. Therefore, even when thermal runaway occurs in any one of the battery modules 100 and gas and/or heat are generated, the gas and/or heat are not quickly spread/transferred to other battery modules 100 by stagnating in the empty space for a certain period of time. As a result, thermal propagation may be delayed. Here, thermal propagation may refer to a phenomenon where the battery module 100/battery cell having thermal runaway occurring therein causes serial thermal runaway in other battery modules 100/battery cells.

In particular, since the empty space is provided in the upper portion of the battery cell, high-temperature gas and/or thermal energy discharged from the battery cell may be at least partially separated from the battery cell and remain in the upper portion of the battery cell. Accordingly, it is possible to prevent or delay thermal runaway occurring in the battery cell from worsening.

In addition, with a simple configuration, thermal propagation may be easily delayed at low cost and worsening of thermal runaway may be suppressed.

According to the embodiment of the present invention, the distance D between the upper end of the predetermined space S and the upper end of the one or more battery cells accommodated in the predetermined space S may be equal to or greater than 1/15 and equal to or less than the vertical length L of the one or more battery cells accommodated in the predetermined space S.

Accordingly, since a large empty space where gas and/or thermal energy discharged from the battery cell stagnates is provided at the top of the battery cell within the predetermined space S that accommodates the battery cell, at least portions of gas and/or thermal energy may be stagnated sufficiently away from the battery cell. As a result, thermal runaway may be prevented or delayed from worsening, and thermal propagation may be effectively delayed.

According to the embodiment of the present invention, at least one of the plurality of battery modules 100 may include a plurality of blocks 110 each of which includes one or more battery cells. The predetermined space S of each of the at least one of the plurality of battery modules 100 may include a plurality of block spaces BS corresponding to the plurality of blocks 110, respectively. Each block space BS may accommodate one or more battery cells included in the block 110 corresponding to the block space BS. The plurality of block spaces BS may be separated from each other. The height of the upper end of each block space BS may be higher than that of the upper end of the one or more battery cells accommodated in the block space BS.

Accordingly, the block spaces BS accommodating the battery cells belonging to the same block 110 (e.g., bank) are separated from each other for each block 110, and an empty space where gas and/or thermal energy discharged from the battery cell belonging to the block 110 in each block space BS stagnates may be provided. Therefore, even when thermal runaway occurs in any one block 110 of one of the plurality of battery modules 100 to generate gas and/or heat, the gas and/or heat may stagnate for a certain period time in the empty space of the block space BS of the corresponding block 110 without transmitted to the other blocks 110 and/or other battery modules 100. Accordingly, thermal propagation may be delayed.

In particular, since the empty space is provided in the upper portion of the battery cell, high-temperature gas and/or thermal energy discharged from the battery cell may be at least partially separated from the battery cell and remain in the upper portion of the battery cell. Accordingly, it is possible to prevent or delay thermal runaway occurring in the battery cell from worsening.

According to the embodiment of the present invention, the module housing 120 of each of the at least one of the plurality of battery modules 100 may include one or more partition walls 122 arranged to be spaced apart from each other in the horizontal direction and partitioning the plurality of block spaces BS. Each of the one or more module covers 300 or at least a portion of the one or more module covers 300 covering the upper portion of each of the at least one of the plurality of battery modules 100 may include an upper frame 310 and one or more ribs 320 protruding downward from the lower surface of the upper frame 310 and corresponding to the one or more partition walls 122, respectively, the one or more ribs 320 extending along the one or more partition walls 122 when projected on a horizontal plane so as to be adjacent to or in contact with the one or more partition walls 122, respectively. The plurality of block spaces BS are partitioned by the partition wall 122 and the rib 320, and thus the plurality of block spaces BS are separated from each other.

Accordingly, since the ribs 320 provided at the module cover 300 partition a plurality of block spaces BS, high-temperature gas and/or heat generated in any one block 110 and stagnating in the upper portion of the block space BS of the corresponding block 110 may be effectively prevented from propagating/transferring to the block space BS of the adjacent blocks 110 through the upper portion of the block space BS. As a result, the thermal propagation delay effect may be improved.

According to the embodiment of the present invention, a through-hole 214 connecting the inside and the outside of the predetermined space S and capable of being opened and closed is provided at the module housing 120, the pack housing 200 or the one or more module covers 300 defining the predetermined spaces S. The through-hole 214 remains closed when a pressure of the predetermined space S is less than a threshold value and is opened when the pressure of the predetermined space S is equal to or greater than the threshold value.

Accordingly, even when thermal runaway occurs in any one battery module 100 to generate gas and/or heat generated, gas and/or heat cannot escape and stagnate in the predetermined space S corresponding to the battery module 100 where thermal runaway is occurring until the pressure of the predetermined space S exceeds the threshold value. As a result, thermal propagation may be delayed.

In addition, even when gas and/or heat is discharged from the predetermined space S through an open through-hole 214 due to the pressure of the predetermined space S of the battery module 100 in which thermal runaway is occurring being higher than the threshold value, other through-holes 214 corresponding to other battery modules 100 remains closed due to the pressure of the predetermined space S of other battery modules 100 being lower than the threshold value, thereby preventing the gas and/or heat discharged from the battery module 100 where thermal runaway is occurring from quickly spreading/transmitting to other battery modules 100. As a result, thermal propagation may be delayed.

According to the embodiment of the present invention, a plurality of through-holes 214 may be provided. Each of the plurality of through-holes 214 may correspond to the predetermined space S of each of the plurality of battery modules 100. The pack housing 200 further may include a plurality of blocking plates 230 installed adjacent to and blocking the plurality of through-holes 214, respectively. When a pressure of a predetermined space S corresponding to a through-hole 214 blocked by a blocking plate 230 is is equal to or greater than the threshold value, the blocking plate 230 blocking the through-hole 214 is damaged to open the through-hole 214. Thus the through-hole 214 remaining closed when a pressure of the predetermined space S is less than the threshold value and being opened when the pressure of the predetermined space S is equal to or greater than the threshold value.

Accordingly, the through-hole 214 connecting the inside and outside of the predetermined space S that may be opened and closed according to the pressure of the predetermined space S may be provided at low cost and with a simple configuration.

According to the embodiment of the present invention, the pack housing 200 may be provided with: a accommodating space C where the plurality of battery modules 100 are accommodated; and a first flow space U1 where gas generated in the plurality of battery modules flows, the first flow space U1 disposed at one side of the accommodating space C in a first direction intersecting with vertical direction. The plurality of battery modules 100 may be accommodated side by side in the accommodating space C in second direction intersecting with the vertical direction and the first direction such that the one or more module covers 300 and a plurality of the predetermined spaces S are arranged or provided side by side in the second direction. The through-hole 214 corresponding to the predetermined space S may be provided at the one side of the predetermined space S in first the direction to connect the predetermined space S and the first flow space U1.

Since the first flow space U1 is provided at one end of the accommodating space C in the first direction rather than above the accommodating space C, the height of the battery pack may be reduced. As a result, the smaller battery pack may be manufactured. In addition, since the height of the upper end of the predetermined space S may be maximized within the allowable range, the volume of empty space where gas and/or thermal energy stagnate increases, thereby improving the thermal propagation delay effect. Further, since at least portions of gas and/or thermal energy may be stagnated in the upper portion of the battery cell sufficiently away from the battery cell, thermal runaway occurring in the battery cell may be prevented or delayed from worsening.

In addition, since all of the gas generated from a plurality of battery modules 100 flows through the first flow space U1, the structure of the battery pack is simplified, and the manufacturing and maintenance costs of the battery pack may be reduced.

According to the embodiment of the present invention, at least one of the plurality of battery modules 100 may include a plurality of blocks 110, each of the plurality of blocks 110 including one or more battery cells. The predetermined space S of each of the at least one of the plurality of battery modules 100 may include a plurality of block spaces BS corresponding to the plurality of blocks 110, respectively. Each of the plurality of block spaces BS may accommodate the one or more battery cells included in each of the plurality of blocks 110 corresponding to each of the plurality of block spaces BS. The plurality of block spaces BS may be separated from each other. The height of the upper end of each of the plurality of block spaces BS may be higher than that of the upper end of the one or more battery cells accommodated in each of the plurality of block spaces BS. The module housing 120 of each of the at least one of the plurality of battery modules 100 may include one or more partition walls 122 arranged to be spaced apart from each other in the horizontal direction and partitioning the plurality of block spaces BS. Each of the one or more module covers 300 or at least a portion of the one or more module covers 300 covering the upper portion of each of the at least one of the plurality of battery modules 100 may include the upper frame 310 and one or more ribs 320 protruding downward from the lower surface of the upper frame 310 and corresponding to the one or more partition walls 122, respectively, the one or more ribs 320 extending along the one or more partition walls 122 when projected on a horizontal plane so as to be adjacent to or in contact with the one or more partition walls 122, respectively. The plurality of block spaces BS are partitioned by the one or more partition walls 122 and the one or more ribs 320 to be separated from each other. The through-hole 214 corresponding to the predetermined space S of each of the at least one of the plurality of battery modules 100 may open and connect the plurality of block spaces BS to outside of the battery module 100.

Accordingly, thermal propagation between the blocks 110 of the battery modules 100 may be delayed by the partition walls 122 and the ribs 320. In addition, the thermal propagation delay effect may be improved by the ribs 320 provided at the module cover 300.

In addition, even when thermal runaway occurs in any one of the blocks 110 and gas and/or heat are generated, the gas and/or heat are not quickly discharged from the block space BS or predetermined space S and stagnate in the block space BS or predetermined space S until the pressure of the block space BS corresponding to the blocks 110 where thermal runaway is occurring or the pressure of the predetermined space S including the block space BS becomes sufficiently high. As a result, thermal propagation may be delayed.

According to the embodiment of the present invention, the one or more partition walls 122 and the one or more ribs 320 may extend in the first direction and be arranged side by side in the second direction perpendicular to the first direction. The through-hole 214 corresponding to the predetermined space S of each of the at least one of the plurality of battery modules 100 may open and connect the plurality of block spaces BS to the outside of the battery module 100 when a pressure of any one of the plurality of block spaces BS increases.

Accordingly, even when the block spaces BS of other blocks 110 as well as the block space BS of the block 110 where thermal runaway is occurring are exposed to the outside of the battery module 100, gas and/or heat discharged from the block space BS of block 110 where thermal runaway is occurring does not flow into the block space BS of other blocks 110 due to the block spaces BS extending in the first direction and provided side by side in the second direction perpendicular to the first direction. This is because gas and/or heat discharged in the first direction from the block space BS of block 110 where thermal runaway is occurring must turn 180 degrees In order to flow into the block space BS of other blocks 110. As a result, thermal propagation may be delayed even when all of block spaces BS are exposed to the outside of the battery module 100 caused by an increase in the pressure of any one of the plurality of block spaces.

According to the embodiment of the present invention, at least one of the one or more module covers 300 may include the upper frame 310 and a separation wall 330 protruding downward from a lower surface of the upper frame 310. The separation wall 330 may be disposed between side walls of the module housing 120 of a pair of battery modules 100 disposed laterally adjacent to each other.

Accordingly, thermal propagation between battery modules 100 is delayed and worsening of thermal runaway may be suppressed.

In addition to the advantageous effects described above, specific effects of the present invention will be described further while describing specific details of the present invention.

### [BRIEF DESCRIPTION OF DRAWINGS]

FIGS. 1 and 2 are a perspective view and an exploded perspective view of a battery pack according to an embodiment of the present invention.
FIG. 3 is a perspective view illustrating the battery pack of FIGS. 1 and 2 with the pack cover removed.
FIGS. 4 and 5 are a perspective view and a plan view illustrating the battery pack of FIG. 3 with the module cover removed.
FIG. 6 is a perspective view illustrating the battery pack of FIGS. 4 and 5 with the battery module removed.
FIG. 7 is a perspective view illustrating the battery pack of FIG. 6 with blocking plate removed.
FIGS. 8 and 9 are perspective views illustrating the module cover of the battery pack of FIGS. 2 and 3.
FIG. 10 is a cross-sectional view taken along line 10-10' of FIG. 1.
FIG. 11 is a table comparing experiment results of the thermal propagation of the prior art and the present invention.

### [DETAILED DESCRIPTION OF THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

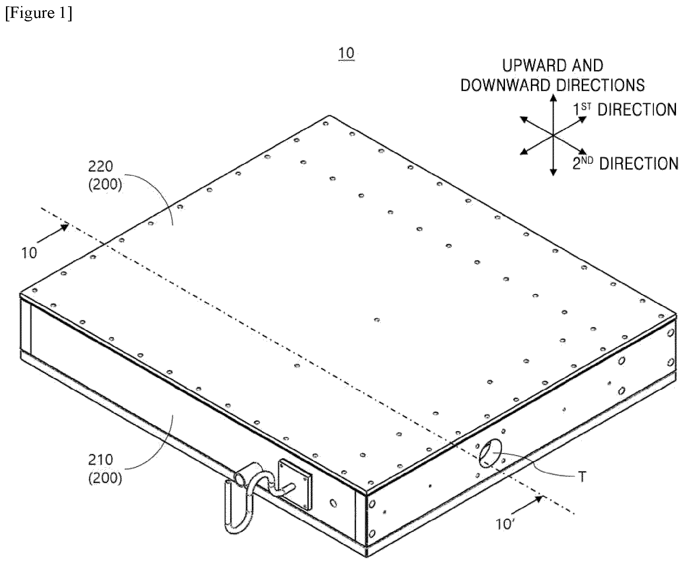

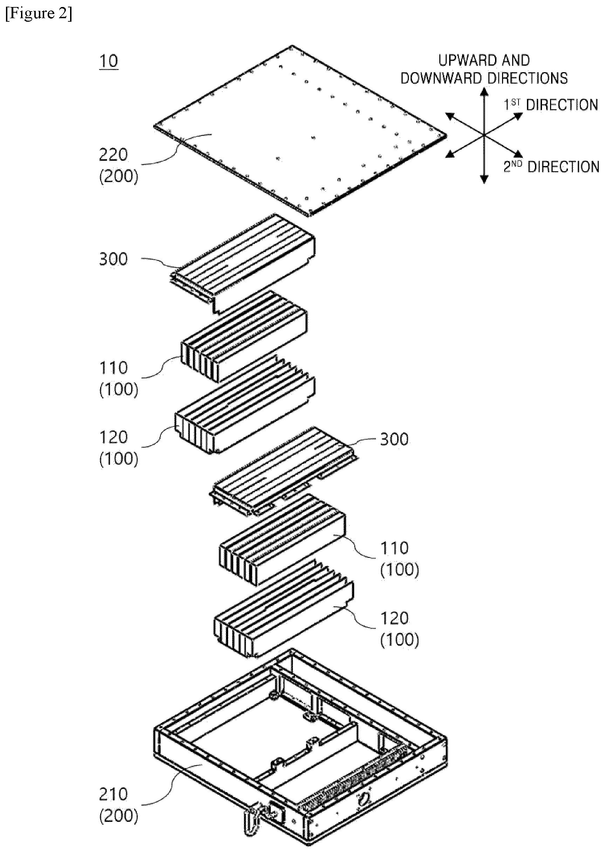

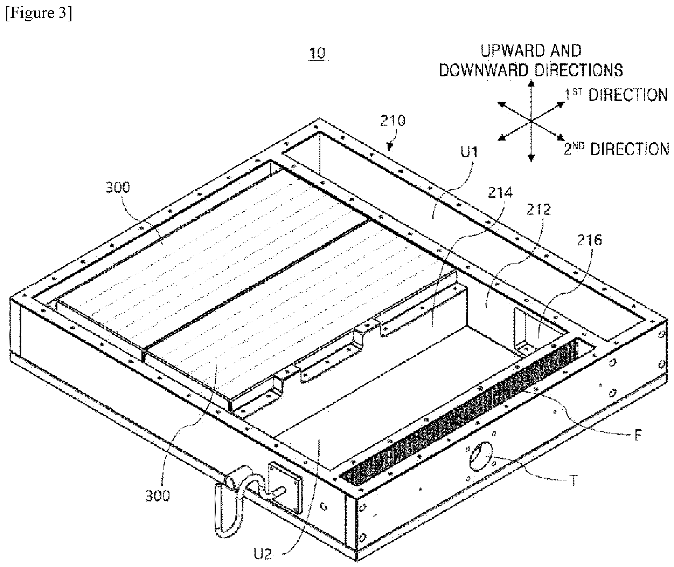

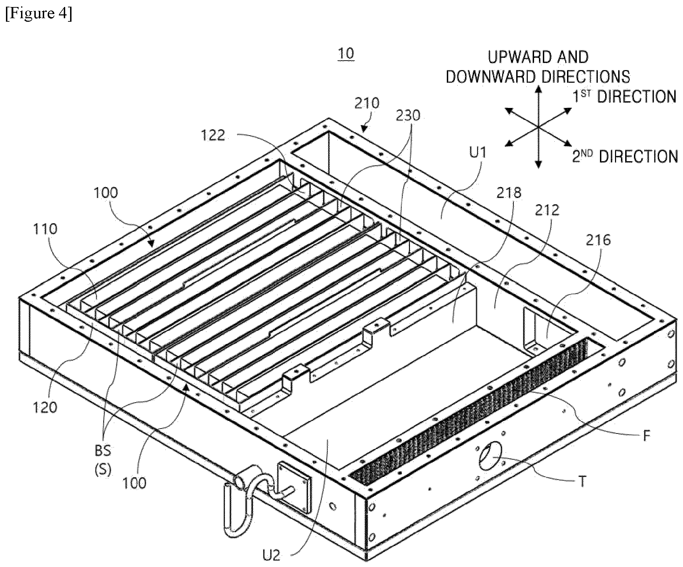

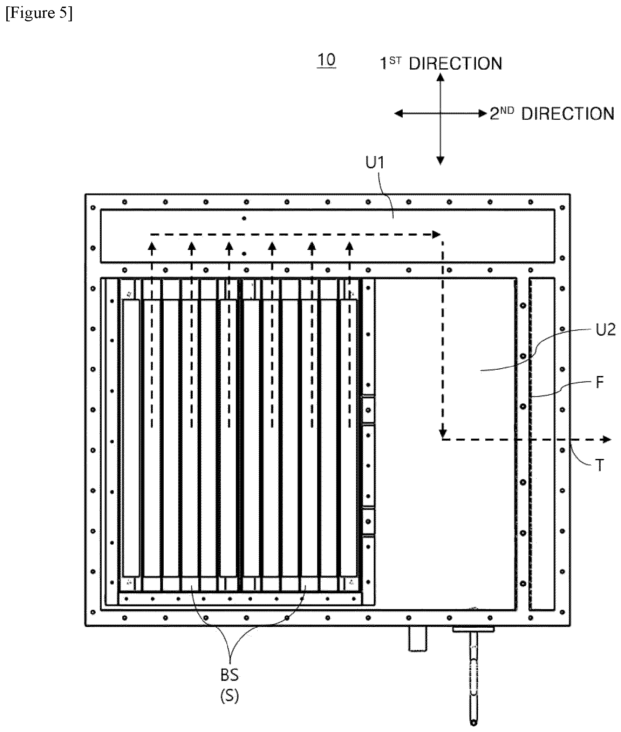

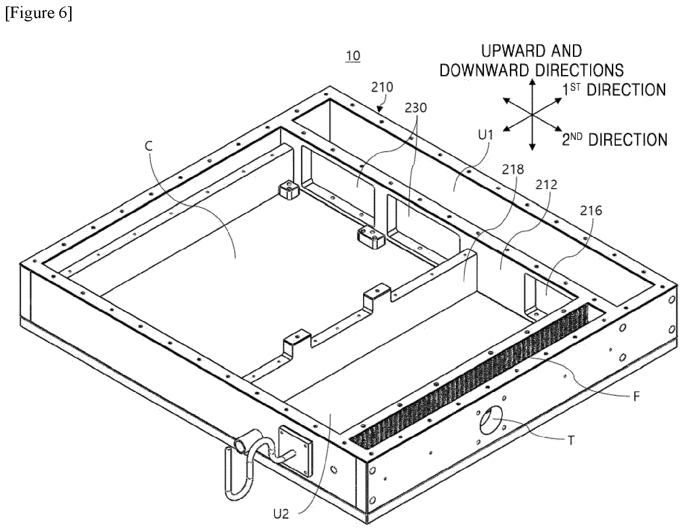

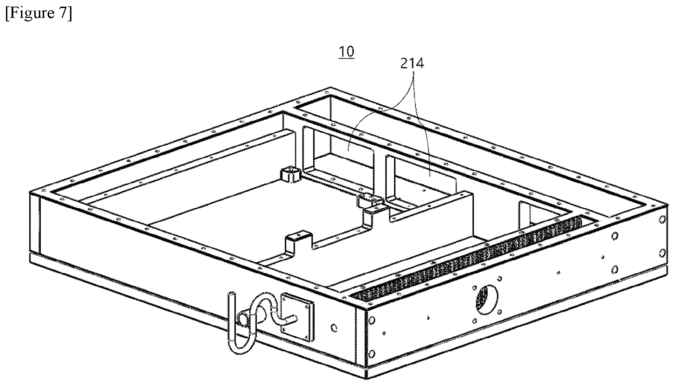

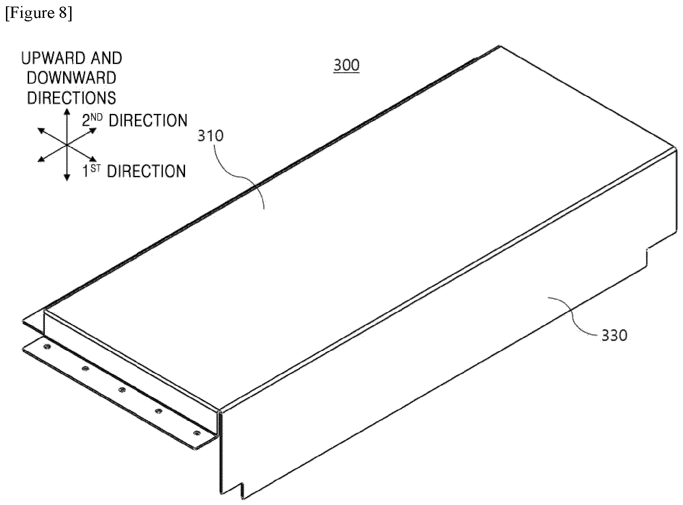

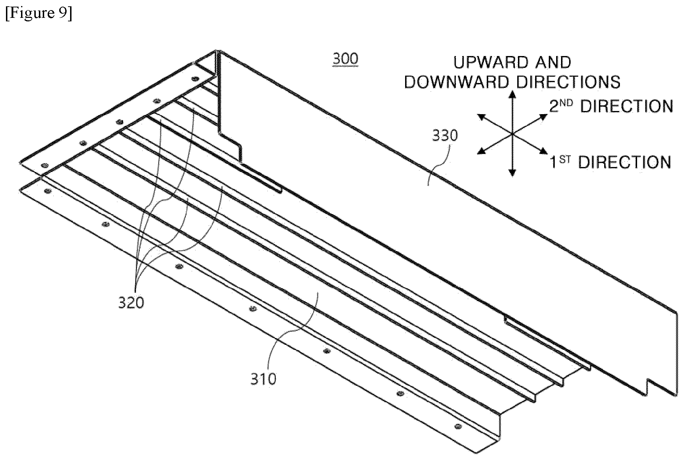

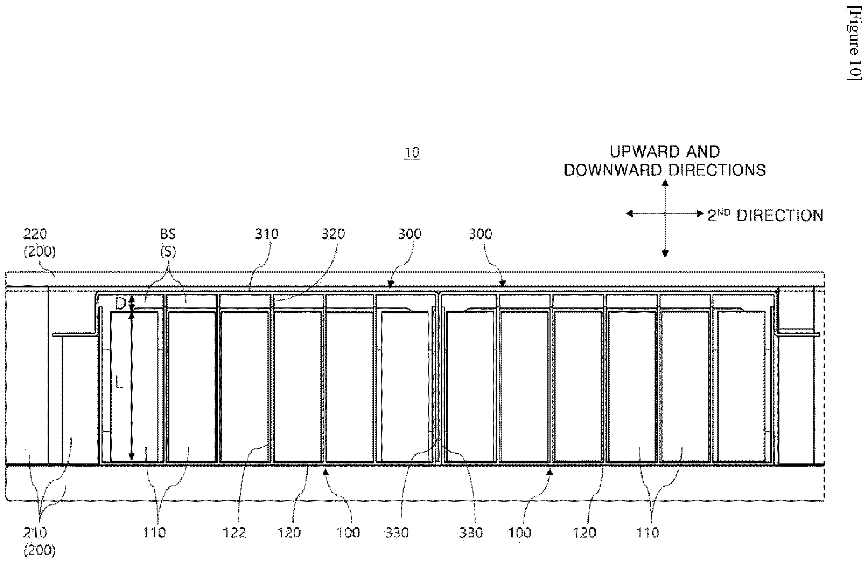

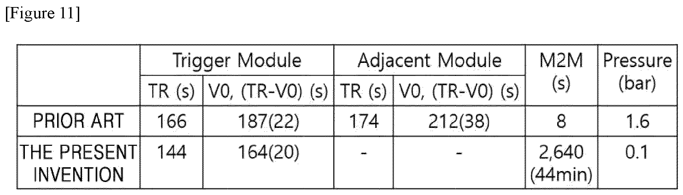

FIGS. 1 and 2 are a perspective view and an exploded perspective view of a battery pack according to an embodiment of the present invention. FIG. 3 is a perspective view illustrating the battery pack of FIGS. 1 and 2 with the pack cover removed. FIGS. 4 and 5 are a perspective view and a plan view illustrating the battery pack of FIG. 3 with the module cover removed. FIG. 6 is a perspective view illustrating the battery pack of FIGS. 4 and 5 with the battery module removed. FIG. 7 is a perspective view illustrating the battery pack of FIG. 6 with blocking plate removed. FIGS. 8 and 9 are perspective views illustrating the module cover of the battery pack of FIGS. 2 and 3. FIG. 10 is a cross-sectional view taken along line 10-10' of FIG. 1. FIG. 11 is a table comparing experiment results of the thermal propagation of the prior art and the present invention.

### [BATTERY PACK]

Referring to FIGS. 1 to 7, a battery pack 10 according to an embodiment may include a plurality of battery modules 100, a pack housing 200, and one or more module covers 300. The battery pack may further include a blocking plate 230.

Each element will be described in detail hereinafter.

### [BATTERY MODULE]

A plurality of battery modules 100 may be provided.

Each battery module 100 may include a plurality of blocks 110. Each block 110 may include one or more battery cells. The block 110 may include a single battery cell or a collection of plurality of battery cells.

Each battery module 100 may include a module housing 120.

A plurality of blocks 110 or one or more battery cells may be accommodated in the module housing 120. The plurality of blocks 110 or one or more battery cells may be arranged side by side in the module housing 120 in the second direction (e.g., left and right direction). The module housing 120 may be at least partially opened upwards.

The module housing 120 may include one or more partition walls 122, which will be described later.

### [PACK HOUSING]

Pack housing 200 may include a body 210 and a pack cover 220. The plurality of battery modules 100 may be accommodated in the pack housing 200.

For example, the pack housing 200 may include an accommodating space C and a first flow space U1. The pack housing 200 may further include a second flow space U2.

The plurality of battery modules 100 may be accommodated in the accommodating space C. In the accommodating space C, the plurality of battery modules 100 may be accommodated side by side in the second direction (e.g., left and right direction). Accordingly, one or more module covers 300 and a plurality of predetermined spaces S may be arranged or formed side by side in the second direction. For example, the plurality of module covers 300 and the plurality of predetermined spaces S corresponding to the plurality of battery modules 100, respectively, may be arranged or formed side by side in the second direction.

The first flow space U1 may be provided at one side (e.g., rear side) of the accommodating space C in the first direction (e.g., front and rear direction). Here, the first direction may be a direction that intersects the upward and downward directions. The first flow space U1 may be in communication with the accommodating space C and the predetermined space S, which will be described later. For example, the first flow space U1 may be in communication with the predetermined space S through a through-hole 214 provided in a first division wall 212, which will be described later. Gas and/or heat generated from a plurality of battery modules 100 may flow in the first flow space U1.

The second flow space U2 may be provided at one side (e.g., right side) of the accommodating space C in the second direction (e.g., left and right directions). Here, the second direction may intersect with a vertical direction and the first direction. The second flow space U2 may be in communication with the first flow space U1 (e.g., through the through-hole 216). Gas and/or heat generated from the battery module 100 accommodated in the accommodating space C may flow in the second flow space U2.

An exhaust port T may be in communication with the second flow space U2. Gas and/or heat generated from the battery module 100 accommodated in the accommodating space C may be discharged to the outside of the pack housing 200 through the exhaust port T.

Meanwhile, the pack housing 200 may include a first division wall 212, a second division wall 218 and/or a filter F.

The first division wall 212 may separate the accommodating space C and the first flow space U1. The first division wall 212 may define a predetermined space S, which will be described later. A through-hole 214, which will be described later, may be provided in the first division wall 212.

The second division wall 218 may separate the accommodating space C and the second flow space U2. The second division wall 218 may define the predetermined space S, which will be described later.

The filter F may be disposed between the second flow space U2 and the exhaust port T. The filter F may prevent inflammable particles separated from the battery cell due to thermal runaway, etc. from being discharged to the outside.

In summary, gas and/or heat generated from the battery module 100 accommodated in the accommodating space C sequentially flows through the first flow space U1, the second flow space U2, the filter F and the exhaust port T to be discharged to the outside of the pack housing 200 (FIG. 5).

### [MODULE COVER]

Further referring to FIGS. 8 and 9, one or more module covers 300 may be provided. The one or more module covers 300 may cover the upper portions of the plurality of battery modules 100.

For example, a plurality of module covers 300 may correspond to the plurality of battery modules 100, respectively. Each module cover 300 may cover the upper portion of the corresponding battery module 100.

The module cover 300 may be coupled to the module housing 120 of the corresponding battery module 100 or to the pack housing 200.

The module cover 300 may include an upper frame 310 and one or more ribs 320. The module cover 300 may include a separation wall 330.

The upper frame 310 may extend in the first direction and the second direction. The upper frame 310 may have a plate shape.

The one or more ribs 320 will be described later.

The separation wall 330 may be provided on at least one module cover 300. The separation wall 330 may protrude downward from the lower surface of the upper frame 310. The separation wall 330 may be interposed between the side walls of the module housing 120 of a pair of battery modules 100 arranged laterally adjacent to each other (FIG. 10).

Accordingly, thermal propagation between battery modules 100 may be delayed and worsening of thermal runaway may be suppressed.

### [PREDETERMINED SPACE]

Further referring to FIG. 10, a plurality of predetermined spaces S may be defined. The plurality of predetermined spaces S may correspond to the plurality of battery modules 100, respectively. Specifically, in each battery module 100, at least one of: the module housing 120 of the battery module 100; and the pack housing 200 and the module cover 300 may define a predetermined space S corresponding to the battery module 100.

Each predetermined space S may accommodate a plurality of blocks 110 or one or more battery cells of the corresponding battery module 100. Each predetermined space S may be blocked on all sides.

Different predetermined spaces S accommodating one or more battery cells of different battery modules 100 may be separated from each other.

The height of the upper end of the predetermined space S may be higher than that of the upper end of the battery cell accommodated in the predetermined space S (FIG. 10).

Accordingly, an empty space where gas and/or thermal energy discharged from the battery cell of the battery module 100 stagnates may be provided in the individual predetermined space S for each battery module 100. Therefore, even when thermal runaway occurs in any one of the battery modules 100 and gas and/or heat are generated, the gas and/or heat are not quickly spread/transferred to other battery modules 100 by stagnating in the empty space for a certain period of time. As a result, thermal propagation may be delayed. Here, thermal propagation may refer to a phenomenon where the battery module 100/battery cell having thermal runaway occurring therein causes serial thermal runaway in other battery modules 100/battery cells.

In particular, since the empty space is provided in the upper portion of the battery cell, high-temperature gas and/or thermal energy discharged from the battery cell may be at least partially separated from the battery cell and remain in the upper portion of the battery cell. Accordingly, it is possible to prevent or delay thermal runaway occurring in the battery cell from worsening.

In addition, with a simple configuration, thermal propagation may be easily delayed at low cost and worsening of thermal runaway may be suppressed.

The distance D between the upper end of the predetermined space S and the upper end of the plurality of blocks 110 or the one or more battery cells accommodated in the predetermined space S may be equal to or greater than 1/15 of a vertical length L of the one or more battery cells accommodated in the predetermined space S and equal to or less than the vertical length L (FIG. 5).

For example, when the vertical length L of a plurality of blocks 110 or one or more battery cells accommodated in the predetermined space S is 100mm, the distance D between the upper end of the predetermined space S and the upper end of the plurality of blocks 110 or the one or more battery cells accommodated in the predetermined space S may be equal to or greater than 10mm. For example, the distance D may be equal to or greater than 20mm.

Accordingly, since a large empty space where gas and/or thermal energy discharged from the battery cell stagnates is provided at the top of the battery cell within the predetermined space S that accommodates the battery cell, at least portions of gas and/or thermal energy may be stagnated sufficiently away from the battery cell. As a result, thermal runaway may be prevented or delayed from worsening, and thermal propagation may be effectively delayed.

### [BLOCK AND BLOCK SPACE]

At least one of the plurality of battery modules 100 may include a plurality of blocks 110. Each of the plurality of blocks 110 may include the one or more battery cells. Here, block 110 may be a bank.

The predetermined space S of each of the at least one of the plurality of battery modules 100 may include a plurality of block spaces BS corresponding to the plurality of blocks 110, respectively (FIG. 10).

Each of the plurality of block spaces BS may accommodate the one or more battery cells included in each of the plurality of blocks 110 corresponding to each of the plurality of block spaces BS. The plurality of block spaces BS may be separated from each other (FIG. 5).

The height of the upper end of each of the plurality of block spaces BS is higher than that of the upper end of the one or more battery cells accommodated in each of the plurality of block spaces BS (FIG. 10).

Accordingly, the block spaces BS accommodating the battery cells belonging to the same block 110 (e.g., bank) are separated from each other for each block 110, and an empty space where gas and/or thermal energy discharged from the battery cell belonging to the block 110 in each block space BS stagnates may be provided. Therefore, even when thermal runaway occurs in any one block 110 of one of the plurality of battery modules 100 to generate gas and/or heat, the gas and/or heat may stagnate for a certain period time in the empty space of the block space BS of the corresponding block 110 without transmitted to the other blocks 110 and/or other battery modules 100. Accordingly, thermal propagation may be delayed.

In particular, since the empty space is provided in the upper portion of the battery cell, high-temperature gas and/or thermal energy discharged from the battery cell may be at least partially separated from the battery cell and remain in the upper portion of the battery cell. Accordingly, it is possible to prevent or delay thermal runaway occurring in the battery cell from worsening.

### [PARTITION WALLS AND RIBS]

The module housing 120 of each of the at least one of the plurality of battery modules 100 may include one or more partition walls 122.

The one or more partition walls 122 may be arranged to be spaced apart from each other in the horizontal direction. For example, the one or more partition walls 122 may be spaced apart from each other and arranged side by side in the second direction (e.g., left and right directions). The one or more partition walls 122 may partition the plurality of block spaces BS (FIG. 10).

Each of the one or more module covers 300 or at least a portion of the one or more module covers 300 covering the upper portion of each of the at least one of the plurality of battery modules 100 may include an upper frame 310 and one or more ribs 320 (FIGS. 9 and 10).

The one or more ribs 320 may protrude downward from the lower surface of the upper frame 310. The one or more ribs 320 may correspond to the one or more partition walls 122, respectively. The one or more ribs 320 may extend along the one or more partition walls 122 when projected on a horizontal plane so as to be adjacent to or in contact with the one or more partition walls 122, respectively.

The plurality of block spaces BS may be partitioned by the one or more partition walls 122 and the one or more ribs 320, and accordingly, the plurality of block spaces BS may be separated from each other.

Accordingly, since the ribs 320 provided at the module cover 300 partition a plurality of block spaces BS, high-temperature gas and/or heat generated in any one block 110 and stagnating in the upper portion of the block space BS of the corresponding block 110 may be effectively prevented from propagating/transferring to the block space BS of the adjacent blocks 110 through the upper portion of the block space BS. As a result, the thermal propagation delay effect may be improved.

### [THROUGH-HOLE AND MEMBRANE PLATE]

One or more through-holes 214 may be provided. The through-hole 214 may be provided at the module housing 120, pack housing 200, or module cover 300 defining the predetermined space S. The through-hole 214 may connect the inside and the outside of the predetermined space S, and can be opened and closed. For example, two through-holes 214 connecting the inside and outside of two predetermined spaces S and capable of being opened and closed may be provided at the first division wall 212 of the pack housing 200, which defines two predetermined spaces S along with two module housings 120 and two module covers 300 (FIGS. 4, 6 and 7).

The through-hole 214 may remain closed when a pressure of the predetermined space S is less than a threshold value and may be opened when the pressure of the predetermined space S is equal to or greater than the threshold value.

Accordingly, even when thermal runaway occurs in any one battery module 100 to generate gas and/or heat generated, gas and/or heat cannot escape and stagnate in the predetermined space S corresponding to the battery module 100 where thermal runaway is occurring until the pressure of the predetermined space S exceeds the threshold value. As a result, thermal propagation may be delayed.

In addition, even when gas and/or heat is discharged from the predetermined space S through an open through-hole 214 due to the pressure of the predetermined space S of the battery module 100 in which thermal runaway is occurring being higher than the threshold value, other through-holes 214 corresponding to other battery modules 100 remains closed due to the pressure of the predetermined space S of other battery modules 100 being lower than the threshold value, thereby preventing the gas and/or heat discharged from the battery module 100 where thermal runaway is occurring from quickly spreading/transmitting to other battery modules 100. As a result, thermal propagation may be delayed.

A plurality of through-holes 214 may be provided. Each of the plurality of through-holes 214 may correspond to the predetermined space S of each of the plurality of battery modules 100 (FIGS. 4 and 7).

Meanwhile, as described above, the first flow space U1 of the pack housing 200 is provide at one side of the accommodating space C in the first direction, and a plurality of battery modules 100 are accommodated side by side in the accommodating space C in the second direction. And thereby the one or more module covers 300 and the plurality of predetermined spaces S are arranged or provided side by side in the second direction. Here, the through-hole 214 corresponding to the predetermined spaces S is provided at one side (e.g., rear side) of the predetermined space S in the first direction to connect the predetermined space S and the first flow space U1 (FIG. 2).

Since the first flow space U1 is provided at the one side of the accommodating space C in the first direction rather than above the accommodating space C, the height of the battery pack may be reduced. As a result, the smaller battery pack may be manufactured. In addition, since the height of the upper end of the predetermined space S may be maximized within the allowable range, the volume of empty space where gas and/or thermal energy stagnate increases, thereby improving the thermal propagation delay effect. Further, since at least portions of gas and/or thermal energy may be stagnated in the upper portion of the battery cell sufficiently away from the battery cell, thermal runaway occurring in the battery cell may be prevented or delayed from worsening.

In addition, since all of the gas generated from a plurality of battery modules 100 flows through the first flow space U1, the structure of the battery pack is simplified, and the manufacturing and maintenance costs of the battery pack may be reduced.

Meanwhile, in the at least one of the plurality of battery modules 100 described above including a plurality of blocks 110, the through-hole 214 corresponding to the predetermined space S of each battery module 100 may open and connect the plurality of block spaces BS to the outside of the battery module 100.

Accordingly, thermal propagation between the blocks 110 of the battery modules 100 may be delayed by the partition walls 122 and the ribs 320. In addition, the thermal propagation delay effect may be improved by the ribs 320 provided at the module cover 300.

In addition, even when thermal runaway occurs in any one of the blocks 110 and gas and/or heat are generated, the gas and/or heat are not quickly discharged from the block space BS or predetermined space S and stagnate in the block space BS or predetermined space S until the pressure of the block space BS corresponding to the blocks 110 where thermal runaway is occurring or the pressure of the predetermined space S including the block space BS becomes sufficiently high. As a result, thermal propagation may be delayed.

The through-hole 214 corresponding to the predetermined space S of each of the at least one of the plurality of battery modules 100 may connect all of the plurality of block spaces BS to the outside of the battery module 100 when a pressure of any one of the plurality of block spaces BS increases. Here the one or more partition walls 122 and the one or more ribs 320 may extend in the first direction and be arranged side by side in the second direction perpendicular to the first direction.

Accordingly, even when the block spaces BS of other blocks 110 as well as the block space BS of the block 110 where thermal runaway is occurring are exposed to the outside of the battery module 100, gas and/or heat discharged from the block space BS of block 110 where thermal runaway is occurring does not flow into the block space BS of other blocks 110 due to the block spaces BS extending in the first direction and provided side by side in the second direction perpendicular to the first direction. This is because gas and/or heat discharged in the first direction from the block space BS of block 110 where thermal runaway is occurring must turn 180 degrees in order to flow into the block space BS of other blocks 110. As a result, thermal propagation may be delayed even when all of block spaces BS are exposed to the outside of the battery module 100 caused by an increase in the pressure of any one of the plurality of block spaces.

A plurality of blocking plates 230 may be provided. The plurality of blocking plates 230 may be installed adjacent to and block the plurality of through-holes 214, respectively (FIGS. 6 and 7).

When a pressure of a predetermined space S corresponding to a through-hole 214 blocked by a blocking plate 230 is equal to or greater than the threshold value, the blocking plate 230 blocking the through-hole 214 is damaged to open the through-hole 214. Thus, when the pressure of a predetermined space S is less than the threshold value, the through-hole 214 remains closed, and when the pressure of the predetermined space S is equal to or greater than the threshold value, the through-hole 214 is opened.

Accordingly, the through-hole 214 connecting the inside and outside of the predetermined space S that may be opened and closed according to the pressure of the predetermined space S may be provided at low cost and with a simple configuration.

### [EXPERIMENT RESULTS]

Further referring to FIG. 11, the time taken for thermal propagation to reach to adjacent battery module 100 after thermal runaway occurs in one of the plurality of battery modules 100 of the battery pack is greater than approximately 44 minutes (2640 seconds) according to the present invention compared to 8 seconds in the conventional battery pack. That is, in the battery pack of the present invention, thermal propagation is significantly delayed.

Meanwhile, in FIG. 11, "V0" represents the time taken until the voltage of the battery module 100 where thermal runaway occurs reaches 0V, and "Pressure" represents the value obtained by subtracting 1 (unit: bar) from the measured value.

It should be understood that the described embodiments are illustrative in all respects and not restrictive, and the scope of the present invention will be indicated by the following claims rather than the described detailed description. And the meaning and scope of the following claims, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

**[DESCRIPTION OF REFERENCE NUMERALS]**

| | | | |
|---|---|---|---|
| 10: | battery pack | | |
| 100: | battery module | 110: | block |
| 120: | module housing | 122: | partition wall |
| S: | predetermined space | BS: | block space |
| 200: | pack housing | 210: | body |
| 212: | first division wall | 214: | through-hole |
| 216: | through-hole | 218: | second division wall |
| 220: | pack cover | 230: | membrane plate |
| C: | accommodating space | | |
| U1: | first flow space | U2: | second flow space |
| F: | filter | T: | exhaust port |
| 300: | module cover | 310: | upper frame |
| 320: | rib | 330: | separation wall |

## Claims

1. A battery pack comprising:
a plurality of battery modules 100 wherein each of the plurality of battery modules 100 comprises one or more battery cells and a module housing 120 where the one or more battery cells are accommodated and which is at least partially opened upwards;
a pack housing 200 where the plurality of battery modules 100 are accommodated; and
one or more module covers 300 covering upper portions of the plurality of battery modules 100,
wherein at least one of: the module housing 120 of each of the plurality of battery modules 100; and the pack housing 200, and the module cover 300 define a predetermined space S blocked on all sides and accommodating the one or more battery cells in each of the plurality of battery modules 100,
different predetermined spaces S accommodating the one or more battery cells of the different battery modules 100 are separated from each other, and
a height of an upper end of the predetermined space S is higher than that of an upper end of the one or more battery cells accommodated in the predetermined space S.

2. The battery pack of claim **1,** wherein a distance D between the upper end of the predetermined space S and the upper end of the one or more battery cells accommodated in the predetermined space S is: equal to or greater than 1/15 of a vertical length L of the one or more battery cells accommodated in the predetermined space S; and equal to or less than the vertical length L.

3. The battery pack of claim 1, wherein at least one of the plurality of battery modules 100 comprises a plurality of blocks 110, each of the plurality of blocks 110 comprising one or more battery cells,
the predetermined space S of each of the at least one of the plurality of battery modules 100 comprises a plurality of block spaces BS corresponding to the plurality of blocks 110, respectively,
each of the plurality of block spaces BS accommodates the one or more battery cells included in each of the plurality of blocks 110 corresponding to each of the plurality of block spaces BS,
the plurality of block spaces BS are separated from each other, and
a height of an upper end of each of the plurality of block spaces BS is higher than that of an upper end of the one or more battery cells accommodated in each of the plurality of block spaces BS.

4. The battery pack of claim 3, wherein the module housing 120 of each of the at least one of the plurality of battery modules 100 comprises one or more partition walls 122 arranged to be spaced apart from each other in the horizontal direction and partitioning the plurality of block spaces BS,
each of the one or more module covers 300 or at least a portion of the one or more module covers 300 covering the upper portion of each of the at least one of the plurality of battery modules 100 comprises an upper frame 310 and one or more ribs 320 protruding downward from a lower surface of the upper frame 310 and corresponding to the one or more partition walls 122, respectively, the one or more ribs 320 extending along the one or more partition walls 122 when projected on a horizontal plane so as to be adjacent to or in contact with the one or more partition walls 122, respectively, and
the plurality of block spaces BS are partitioned by the one or more partition walls 122 and the one or more ribs 320 to be separated from each other.

5. The battery pack of claim 1, wherein a through-hole 214 connecting the inside and the outside of the predetermined space S and capable of being opened and closed is provided at the module housing 120, the pack housing 200 or the one or more module covers 300 defining the predetermined spaces S, the through-hole 214 remaining closed when a pressure of the predetermined space S is less than a threshold value and being opened when the pressure of the predetermined space S is equal to or greater than the threshold value.

6. The battery pack of claim 5, wherein a plurality of through-holes 214 is provided, each of the plurality of through-holes 214 corresponding to the predetermined space S of each of the plurality of battery modules 100,
the pack housing 200 further comprises a plurality of blocking plates 230 installed adjacent to and blocking the plurality of through-holes 214, respectively,
when a pressure of a predetermined space S corresponding to a through-hole 214 blocked by a blocking plate 230 is equal to or greater than the threshold value, the blocking plate 230 blocking the through-hole 214 is damaged to open the through-hole 214, and
thus the through-hole 214 remaining closed when a pressure of the predetermined space S is less than the threshold value and being opened when the pressure of the predetermined space S is equal to or greater than the threshold value.

7. The battery pack of claim 5, wherein the pack housing 200 is provided with: an accommodating space C where the plurality of battery modules 100 are accommodated; and a first flow space U1 where gas generated in the plurality of battery modules flows, the first flow space U1 disposed at one side of the accommodating space C in first direction intersecting with vertical direction,
the plurality of battery modules 100 are accommodated side by side in the accommodating space C in second direction intersecting with the vertical direction and the first direction such that the one or more module covers 300 and a plurality of the predetermined spaces S are arranged or provided side by side in the second direction, and
the through-hole 214 corresponding to the predetermined space S is provided at the one side of the predetermined space S in the first direction to connect the predetermined space S and the first flow space U1.

8. The battery pack of claim 7, wherein at least one of the plurality of battery modules 100 comprises a plurality of blocks 110, each of the plurality of blocks 110 comprising one or more battery cells,
the predetermined space S of each of the at least one of the plurality of battery modules 100 comprises a plurality of block spaces BS corresponding to the plurality of blocks 110, respectively,
each of the plurality of block spaces BS accommodates the one or more battery cells included in each of the plurality of blocks 110 corresponding to each of the plurality of block spaces BS,
the plurality of block spaces BS are separated from each other,
a height of an upper end of each of the plurality of block spaces BS is higher than that of an upper end of the one or more battery cells accommodated in each of the plurality of block spaces BS.
the module housing 120 of each of the at least one of the plurality of battery modules 100 comprises one or more partition walls 122 arranged to be spaced apart from each other in the horizontal direction and partitioning the plurality of block spaces BS,
each of the one or more module covers 300 or at least a portion of the one or more module covers 300 covering the upper portion of each of the at least one of the plurality of battery modules 100 comprises an upper frame 310 and one or more ribs 320 protruding downward from a lower surface of the upper frame 310 and corresponding to the one or more partition walls 122, respectively, the one or more ribs 320 extending along the one or more partition walls 122 when projected on a horizontal plane so as to be adjacent to or in contact with the one or more partition walls 122, respectively,
the plurality of block spaces BS are partitioned by the one or more partition walls 122 and the one or more ribs 320 to be separated from each other, and
the through-hole 214 corresponding to the predetermined space S of each of the at least one of the plurality of battery modules 100 connects the plurality of block spaces BS to outside of the battery module 100.

9. The battery pack of claim 8, wherein the one or more partition walls 122 and the one or more ribs 320 extend in the first direction and are arranged side by side in the second direction perpendicular to the first direction, and
the through-hole 214 corresponding to the predetermined space S of each of the at least one of the plurality of battery modules 100 connects the plurality of block spaces BS to the outside of the battery module 100 when a pressure of any one of the plurality of block spaces BS increases.

10. The battery pack of claim 1, wherein at least one of the one or more module covers 300 comprises an upper frame 310 and a separation wall 330 protruding downward from a lower surface of the upper frame 310, and
the separation wall 330 is disposed between side walls of the module housing 120 of a pair of battery modules 100 disposed laterally adjacent to each other.
